# EUROPEAN PATENT SPECIFICATION

(11) **EP 4 163 512 B1**
(45) Date of publication and mention of the grant of the patent: **03.06.2026**
(21) Application number: 21201124.1
(22) Date of filing: 06.10.2021
(51) Int. Cl.: F16D 65/097

(54) **BRAKE PAD**
BREMSBELAG
PLAQUETTE DE FREIN

(43) Date of publication of application: 12.04.2023
(73) Proprietor: MAT Commercial Vehicle Products GmbH, 51709 Marienheide (DE)
(72) Inventor: EISENMANN, Markus, 51709 Marienheide (DE); WURTH, Dirk, 51709 Marienheide (DE)
(74) Representative: Richardt Patentanwälte PartG mbB

(56) References cited:
- WO-A1-2020/125954
- DE-A1- 102018 221 311
- US-A1- 2008 110 703

## Description

### Field of the invention

The invention relates to brake systems for trucks.

### Background and related art

The brake systems for large trucks, such as semi-trailer truck have pneumatic brake systems commonly known as air brakes or compressed air brake systems. Some types of pneumatic brake systems maintain a constant level of contact between the brake pads and the brake disc so that the brakes are able to be used quickly.

International patent application publication WO2020125954A1 discloses a wheel brake arrangement for a wheel of a vehicle, the wheel brake arrangement comprising a retainer bar and a resilient member connected between the retainer bar and a brake pad arrangement of the wheel brake arrangement.

### Summary

The invention provides for a brake system, a brake pad assembly, a brake pad, and a method of manufacturing a brake pad in the independent claims. Embodiments are given in the dependent claims.

A retraction spring may be used to pull the brake pads away from brake disc when the brakes are not being applied. This may result in less wear to the brake system as well as reduced fuel consumption. Embodiments may provide for a more effective means of fastening a retraction spring to a brake pad. This may be achieved by using retaining pins to form a retraction spring holder. These retaining pins may provide a means of manufacturing the brake pads to very accurate mechanical tolerances at a reduced cost. Retaining pins may also referred to as pins herein.

In one aspect the invention provides for a brake system for a truck. The brake system comprises a brake disc. The brake system further comprises a brake pad assembly that comprises a brake pad and a retraction spring. The brake pad comprises a backing plate and a friction pad. The backing plate has a front and a back surface. The friction pad is attached to the front surface of the backing plate. The brake pad comprises a retraction spring holder mounted to the back surface. The back surface is the opposite surface from the front surface. The retraction spring holder is therefore mounted to the surface of the brake pad opposite of the friction pad.

The brake system further comprises a brake caliper configured for pressing the brake pad assembly such that the friction pad contacts the brake disc. This is how the brake system is used to reduce the velocity of the truck. The brake system further comprises a structural element. The structural element extends across the brake pad assembly. The brake system further comprises a retraction spring installed in the retraction spring holder. In some examples the retraction spring may be a part of the brake pad assembly. That is the brake pad assembly may be a combination of the brake pad and the retraction spring.

The retraction spring is configured to form a sliding contact with the structural element such that the tension in the retraction spring increases as the brake caliper presses the friction pad against the brake disc. A consequence of this is that there will be a force that moves the brake pad away from the brake disc. The sliding contact between the retraction spring and the structural element is configured to provide a restoring force on the brake pad and moves the brake pad away from the brake disc to a non-activated position. This is beneficial because the brake disc and the brake pad do not need to be in contact all of the time. For many larger trucks such as semi-trailer trucks, they are designed such that the brake disc and the brake pad remain in a sliding contact at all times. This however has several disadvantages that this may lead to a continuous generation of heat. Brakes where the brake disc is in constant contact with the brake pad may therefore necessitate the use of pneumatic brakes to ensure that the hydraulic brake fluid does not overheat and cause the brakes to lock. Using the retraction spring and a combination of the structural element may have the benefit that it enables a larger class of trucks to be equipped with hydraulic brakes.

The retraction spring holder is formed from multiple retaining pins. Each of the multiple retaining pins is attached to the back surface of the backing plate. Each of the multiple pins comprises a side surface. The side surface has a profile configured to hold the retraction spring at the back surface. This may be advantageous because the use of the multiple retaining pins provides a very secure way of holding the retraction spring as well as being very sturdy and lightweight. Attaching the pins to the backing plate may also provide for a means of manufacturing the brake pad more inexpensively.

In another embodiment the retraction spring is formed as an elongated loop. For example the retraction spring could be formed from a piece of spring wire that is formed into the elongated loop. The retraction spring comprises two end sections that overlap at one end of the elongated loop. The two end sections form a V-shaped tensioning structure that may extend beyond the elongated loop. The structural element comprises a wedge-shaped surface.

The wedge-shaped surface and the V-shaped tensioning structure form the sliding contact. The two end sections may for example fit over the wedge. The wedge-shaped surface is configured for tensioning the retraction spring by forcing the two ends of the V-shaped tensioning structure apart. This could for example be achieved mechanically in several different ways. The angle of the wedge could change as the surface approaches the brake disc. Another possibility is that the position of the wedge relative to the brake pad could change. For example the wedge could push down more on the V-shaped tensioning structure as the brake pad approaches the brake disc.

The retraction spring holder is configured to receive and hold the elongated loop of the retraction spring with the side surface of each of the multiple pins. Using the side surface also has the benefit in that the position of the elongated loop relative to the back surface can be very precisely controlled. For example, to insert pins into the back surface it is only necessary to have holes. It is easy to align and position holes accurately. The position of the side surface relative to the elongated loop can therefore be very precisely and inexpensively manufactured. This may for example enable the construction of brake pads to higher tolerances with a reduced cost.

In another embodiment the brake caliper is a pneumatic brake caliper. This embodiment may be beneficial because it enables brake systems with pneumatic brakes to be retrofit with a brake pad that does not need to be in constant contact with the brake disc. This may for example enable the construction of brake systems for trucks that are able to operate for a longer time without the brake pad assembly or brake pad being replaced.

In another embodiment the brake caliper is a hydraulic brake caliper. As was mentioned above, this may be beneficial because the use of the retraction spring may enable the use of brakes which do not need to have the brake disc in constant contact with the brake pad.

In another aspect the invention provides for a brake pad that comprises a backing plate and a friction pad. The backing plate has a front surface and a back surface. The friction pad is attached to the front surface of the backing plate. The brake pad comprises a retraction spring holder mounted to the back surface. The retraction spring holder is formed from the multiple retaining pins. Each of the multiple retaining pins is attached to the back surface of the backing plate. Each of the multiple pins comprises a side surface. The side surface has a profile configured to hold a retraction spring at the back surface. This embodiment may be beneficial because the use of the pins enables the brake pad to be manufactured to extremely accurate tolerances at a reduced cost. The use of the pins may also reduce the weight of the brake pad relative to other solutions.

In another embodiment the retraction spring holder is configured to receive and hold an elongated loop of the retraction spring with the side surface of each of the multiple pins. The use of the side surface enables a very precise and controlled means of positioning the retraction spring relative to the back surface of the backing plate.

In another embodiment the multiple pins are configured to receive the elongated loop via a sliding fit. For example the multiple pins may be arranged such that the elongated loop can be slid into the retraction spring holder, for example along an insertion direction. This may for example enable the reuse of the retraction spring when the brake pads are changed. In some examples the structural element may be arranged such that it exerts a force on the tensioning element along the sliding direction. This may have the advantage of holding the brake pad in position. The retraction spring may then also function as a hold down spring. In German the term for this hold down spring is known as a "Niederhaltefeder."

In another embodiment the multiple retaining pins comprise five outer pins configured to hold the elongated loop from an outer edge of the elongated loop. One of the five outer pins functions as an end stop configured to restrict the sliding fit of the retraction spring.

In another embodiment the multiple retaining pins comprise two outer pins configured to hold the elongated loop from an outer edge of the elongated loop and to function as end stops restricting the sliding fit of the retraction spring. The multiple pins further comprise two inner pins each configured to hold the elongated loop from an inner edge of the elongated loop.

In another embodiment the multiple retaining pins comprise four outer pins configured to hold the elongated loop from an outer edge of the elongated loop. Two of the four outer pins function as end stops configured to restrict the sliding fit of the retraction spring. One of the multiple pins comprises an inner pin configured to hold the elongated loop from an inner edge of the elongated loop.

In another embodiment each of the multiple retaining pins is attached to the backing plate using an interference fit. The use of an interference fit, which may be a press fit or a fit which uses a thermal differential during assembly, may be beneficial because it may enable the multiple retaining pins to durably stay attached.

In another embodiment the profile of the side surface is cylindrically symmetric. The cylindrical symmetry may be about an axis of symmetry that is perpendicular to the back surface. The profile of the side surface is concave. This embodiment may be beneficial because the cylindrical symmetry means that the pin must only be inserted at the proper location. It is then not necessary to control the orientation of the individual pins. This may have the benefit of reducing the manufacturing costs and increasing the ability to manufacture the brake pads to very precise mechanical tolerances.

In another embodiment the concave profile of the side surface is configured such that the side surface is configured for overhanging and under hanging at least a portion of the profile of the spring. This may be beneficial because it enables very precise control of the distance of the spring above the backing plate.

In another aspect the invention provides for a brake pad assembly that comprises a brake pad and a retraction spring. The brake pad comprises a backing plate and a friction pad. The brake pad further comprises a retraction spring. The backing plate has a front surface and a back surface. The friction pad is attached to the front surface of the backing plate. The brake pad comprises a retraction spring holder mounted to the back surface. The retraction spring holder is formed from multiple retaining pins. Each of the multiple retaining pins is attached to the back surface of the backing plate. Each of the multiple pins comprises a side surface. The side surface has a profile configured to hold the retraction spring at the back surface. The retraction spring is installed in the retraction spring holder.

In another embodiment the retraction spring comprises two end sections that overlap at one end of the elongated loop. The two end sections form a V-shaped tensioning structure. The retraction spring holder is configured to receive and hold the elongated loop of the retraction spring with the side surface of each of the multiple pins.

In another embodiment the two end sections extend beyond the elongated loop to form the V-shaped tensioning structure.

In another embodiment the retraction spring has a circular profile. The profile of the side surfaces of each of the multiple pins is cylindrically symmetric. The side surface has a concave profile configured for receiving the circular profile. The contour of the side surface may take different forms in different examples. For example, it may have a circular or oval shape; it may also be a groove or notch shaped profile that is cut into the side surface. All these may be beneficial because they may accurately hold the retraction spring at a predetermined distance or position above the backside of the backing plate.

In another embodiment the elongated loop comprises two rod-shaped sections. The two rod-shaped sections are parallel. The retraction spring holder may be configured to receive the two rod-shaped sections. This embodiment may be beneficial because it may provide for a retraction spring which is easily slid into or installed into the retraction spring holder.

In another aspect the invention provides for a method of manufacturing a brake pad. The method comprises providing a backing plate with a front surface and a back surface. The method further comprises attaching a friction pad to the front surface. The friction pad may be attached in a variety of ways. For example, in some instances the friction pad is attached to the front surface with an adhesive. In other examples the friction pad may for example be formed via a pressing and heating operation on the front surface. In other examples the friction pad may be bonded to the front surface using pressure and by roughening the front surface.

The method further comprises attaching multiple pins to the back surface to form a retraction spring holder. Each of the multiple pins comprises a side surface. The side surface has a profile configured to hold a retraction spring at the back surface. This embodiment may be beneficial because it may provide for an inexpensive and efficient means of manufacturing a brake pad.

In another embodiment the method further comprises stamping mounting holes into the backing plate before attaching the friction pad to the front surface. Each of the multiple pins is mounted in one of the mounting holes using an interference fit. This embodiment may be very beneficial because the mounting holes may be added very inexpensively.

### Brief description of the drawings

In the following embodiments of the invention are explained in greater detail, by way of example only, making reference to the drawings in which:
- Fig. 1: illustrates an example of a brake system;
- Fig. 2: illustrates an example of a retraction spring;
- Fig. 3: illustrates the interaction between the retraction spring an a wedge shaped surface;
- Fig. 4: illustrates an example of a brake pad;
- Fig. 5: illustrates an example of a brake pad assembly;
- Fig. 6: illustrates a further example of a brake pad;
- Fig. 7: illustrates a further example of a brake pad assembly;
- Fig. 8: illustrates a further example of a brake pad;
- Fig. 9: illustrates a further example of a brake pad assembly;
- Fig. 10: further illustrates the brake pad assembly of Fig. 9;
- Fig. 11: illustrates an example pin holding a retraction spring;
- Fig. 12: illustrates a further example of a pin holding a retraction spring; and
- Fig. 13: illustrates a method of manufacturing a brake pad.

### Detailed Description

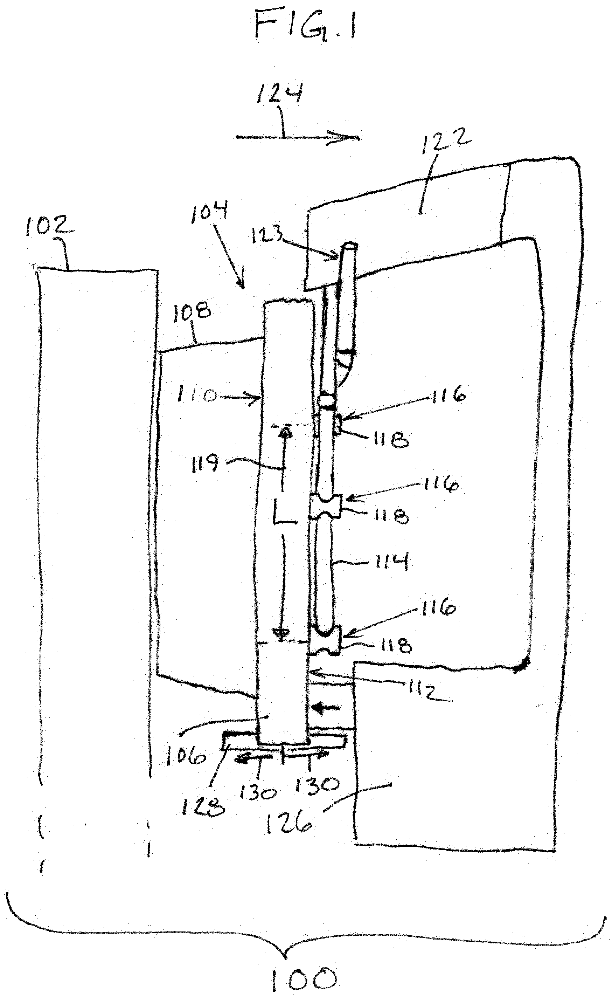

Fig. 1 illustrates an example of a brake system 100. The brake system 100 is shown as comprising a brake disc 102 and a brake pad 104. The brake pad 104 comprises a backing plate 106 and a friction pad 108. The backing plate 106 has a front surface 110 and a back surface 112. The friction pad 108 is attached to the front surface 110. Also shown is a retraction spring 114 that is mounted in a retraction spring holder 116. The retraction spring holder 116 is formed from pins 118 that are mounted to the back surface 112.

There is a retraction spring 114 mounted in the pins 118 of the retraction spring holder 116. The pins 118 are spaced a distance I apart. Spacing them further apart makes the retraction spring holder 116 more mechanically stable. The retraction spring 114 forms a sliding contact 123 with a structural element 122. An increase in the tension in the retraction spring 114 causes a restoring force in the direction 124. It can be seen that the restoring force 124 has resulted in the friction pad 108 being offset from or not in contact with the brake disc 102. Below is a portion 126 of a brake caliper that is configured to exert a force on the back surface 112 of the brake pad 104 and causes it to move along a track 128 for the brake pad 104; it can travel in the directions 130. The brake caliper 126 will cause the friction pad 108 to contact the brake disc 102 and the retraction spring 114 will pull it a predetermined distance away from it once force is removed from the brake caliper 126.

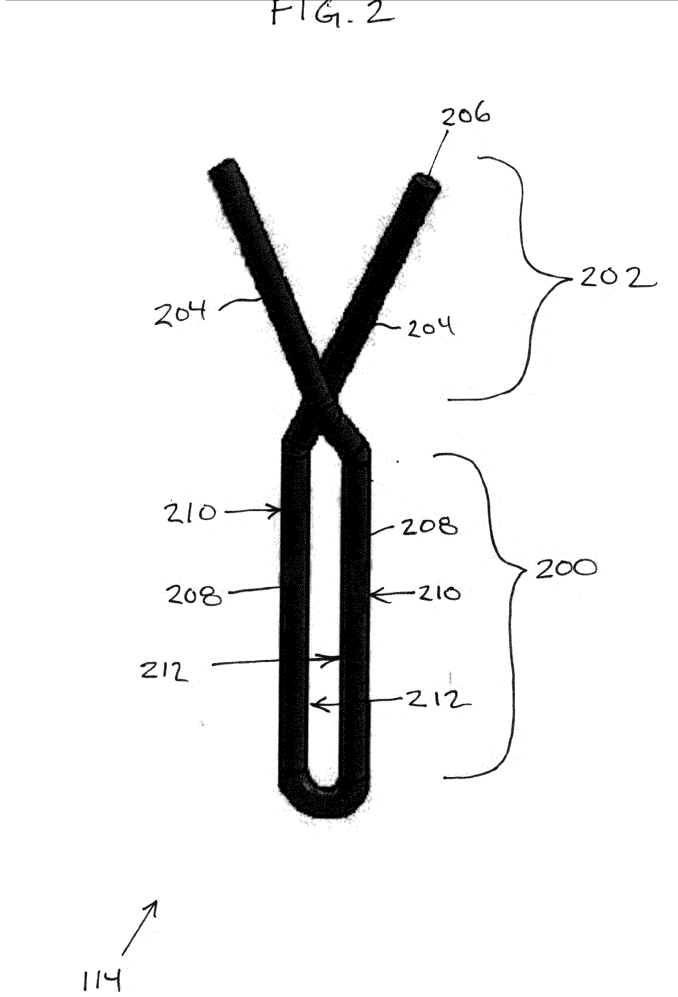

Fig. 2 illustrates an example of a retraction spring 114. It comprises an elongated loop 200 with a V-shaped tensioning structure 202 at one end. The elongated loop 200 has two end sections 204 that extend beyond the elongated loop 200 and have end sections 204 that are straight and form the V-shaped tensioning structure 202. The retraction spring 114 is shown in this example as having a circular profile 206.

The elongated loop 200 is shown as having two rod-shaped sections 208. These two rod-shaped sections 208 are parallel. The area outside of the elongated loop 200 has an outer edge 210 and the area encircled by the elongated loop 200 has an inner edge 212. The outer edge 210 and the inner edge 212 are used to contact the pins 118 in different ways in different examples.

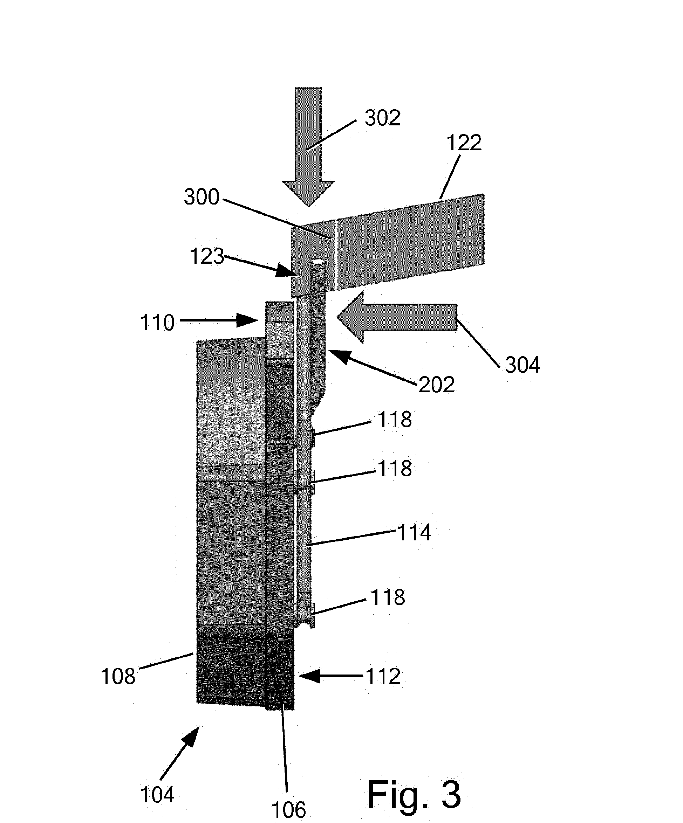

Fig. 3 shows a combined view of a brake pad 104 and the structural element 122. The V-shaped tensioning structure 202 contacts a wedge-shaped surface 300 on the structural element 122. This in general exerts a downward force in direction 302 that holds the brake pad 106 in place. The arrow 304 indicates the direction of force from the brake caliper. Because the downward force is exerted in the direction 302, the retraction spring 114 also functions as a Niederhaltefeder configured to hold the brake pad in the brake system 100. The downward force can also cause the retraction spring 114 to be pushed into the retraction spring holder.

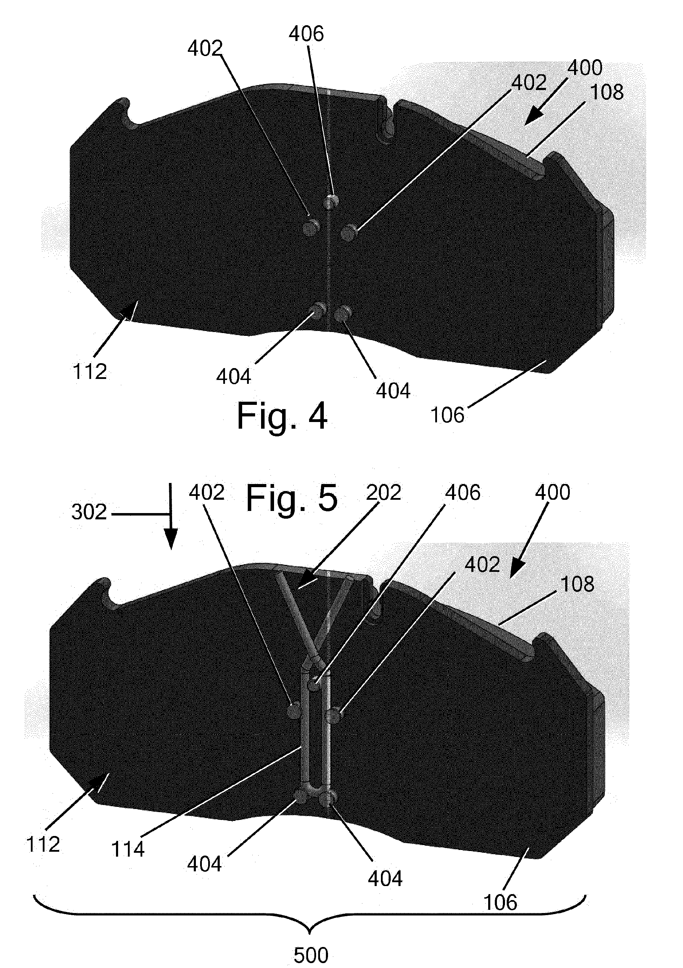

Fig. 4 illustrates a further example of a brake pad 400. On the back surface 104 of the backing plate 106 can be seen five pins 402, 404, and 406. There are two pins configured as an outer pin 402, there are another two retaining pins 404, which are configured as an outer pin and an end stop and there is a fifth pin configured as an inner pin 406. Outer pins are configured to hold the retraction spring 114 by contacting the outer edge 210. The end stop pins 404 are configured for contacting the outer edge 210 and also restricting motion of the retraction spring 114 in the direction 302 indicated in Fig. 3.

Fig. 5 shows the same brake pad 400 but now as a brake pad assembly 500 with the retraction spring 114 installed by sliding it along an insertion direction 302. When the brake pad is installed in the brake system 100, this insertion direction 302 is identical with the direction that the force 302 in Fig. 3 is exerted. The force from the V-shaped wedge 300 therefore will press the spring 114 into the end stops 404 and this force will hold the brake pad 106 in place when assembled in the brake system 100.

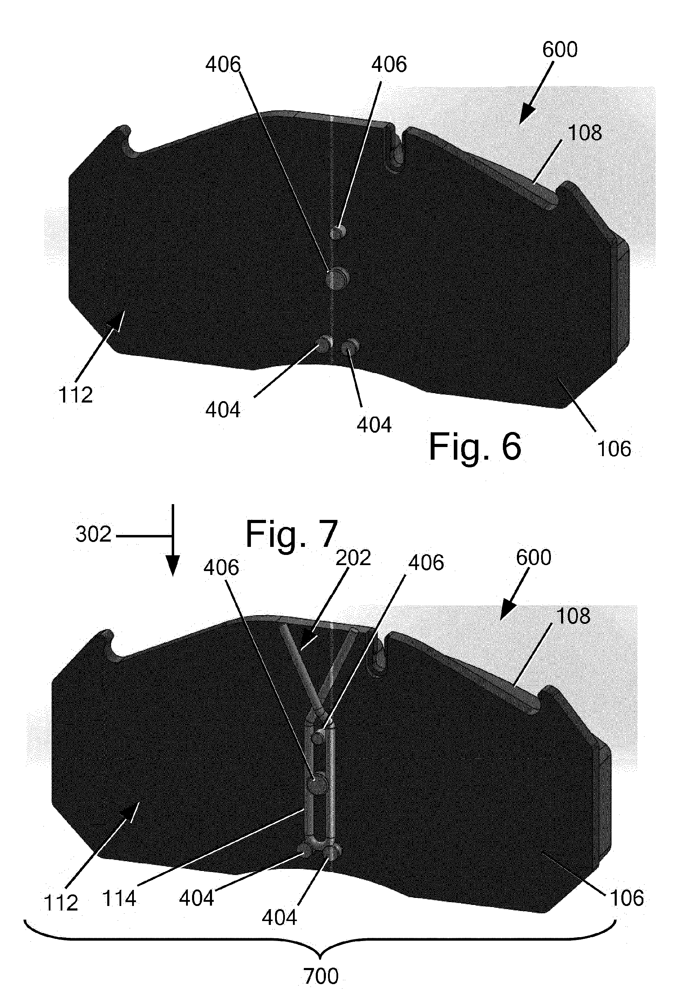

Figs. 6 and 7 illustrate a further example of a brake pad 600. The brake pad itself 600 is depicted in Fig. 6. In Fig. 7 the retraction spring 114 has been installed to form a brake pad assembly 700. In this example there are two retaining pins configured as outer pins and end stops 404. There are then two pins 406 configured as inner pins.

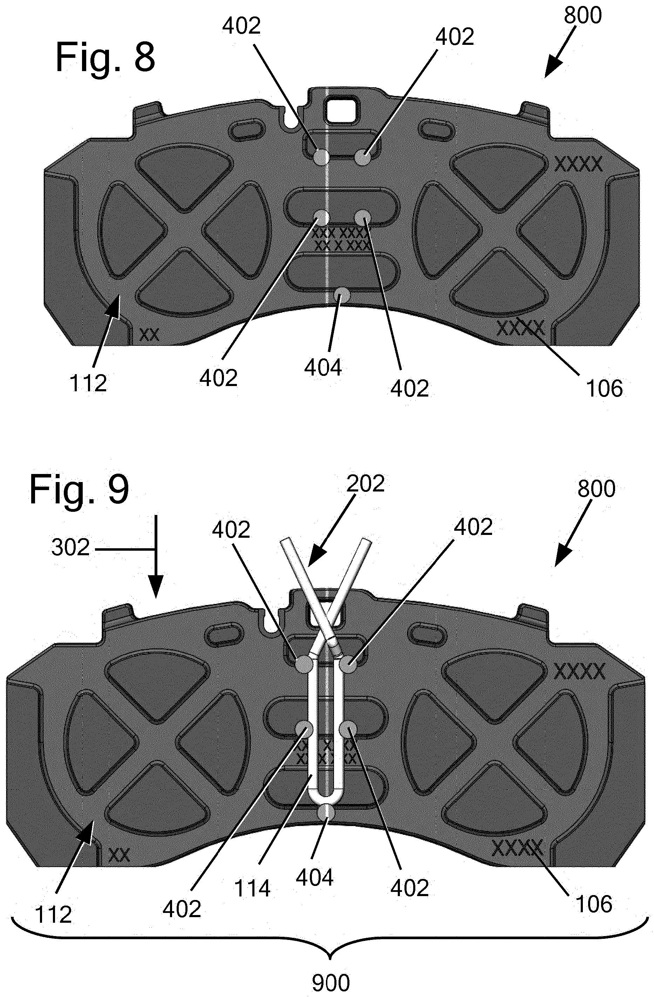

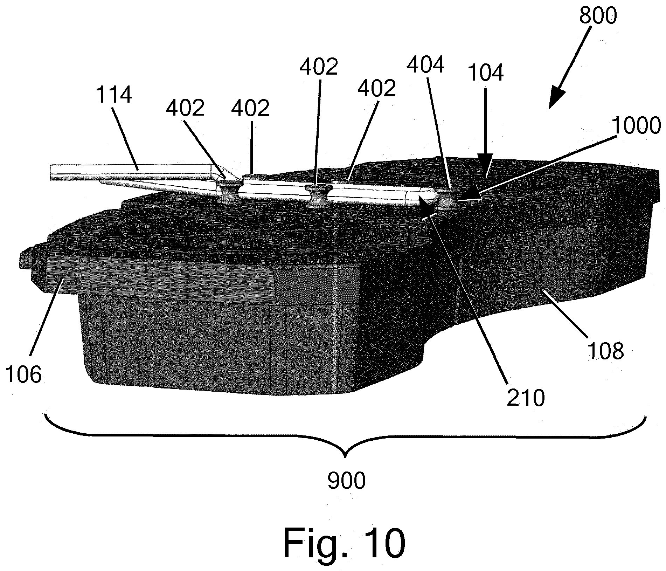

Figs. 8, 9, and 10 illustrate a further example of a brake pad 800. Figs. 9 and 10 depict the brake pad 800 with a retraction spring 114 installed forming a brake pad assembly 900. In this example there are five pins 402 installed in the back surface 112 of the backing plate 106. There is one retaining pin which functions as an outer pin and an end stop 404. There are then also four additional retaining pins which are configured as outer pins 402. Fig. 10 further shows a perspective view of the brake pad assembly 900 that illustrates how the outer pins 402, 404 contact the outer edge 210 of the retraction spring 114 and hold it.

The pins 402, 404 can be seen as being cylindrically symmetric and having a side surface 1000 that contacts and holds the outer edge 210 of the retraction spring 114.

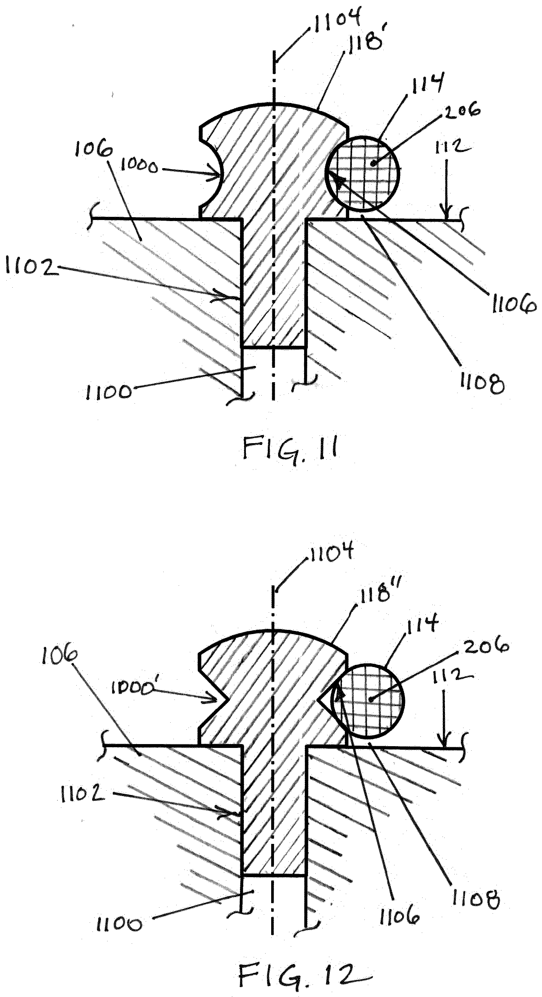

Fig. 11 shows a cross sectional view of a retaining pin 118' that has been inserted into a pin mounting hole 1100 in the back surface 112 of the backing plate 106. The retaining pin 118' may be held in the pin mounting hole 1100 using an interference fit 1102. The retaining pin 118' is cylindrically symmetric about an axis of symmetry 1104 and has a side surface 1000 with a smooth concave profile that provides a matching profile 1106 with the circular profile 206 of the retraction spring 114. In Fig. 11 the matching profile 1106 is smooth. The side surface 1000 partially overhangs and under hangs the retraction spring 114 and precisely holds it a predefined distance 1108 above the back surface 112 of the backing plate 106. The predefined distance 1108 could be chosen such that the retraction spring is in contact with the back surface 112, however it may be advantageous to choose the predefined distance 1108 to be above the back surface 112 to reduce mechanical noise.

Fig. 12 shows in a further cross sectional view an alternative retaining pin 118" design with a different design for the side surface 1000'. Instead of the smooth side surface 1000 shown in Fig. 11 there is an angled or notched profile which has been cut into the side surface 1000'. The side surface 1000' still contacts the retraction spring 114 in two places forming the matching profiles 1106 to securely hold the retraction spring 114 at the predefined distance 1108 above the back surface 112 of the backing plate 106.

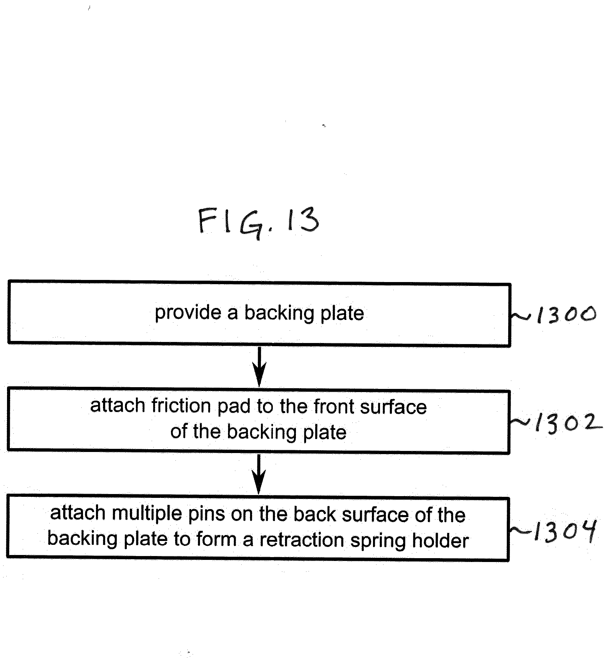

Fig. 13 illustrates an example of manufacturing a brake pad. First, in step 1300 a backing plate 106 is provided. The backing plate has a front surface 110 and a back surface 112. Next in step 1302 a friction pad 108 is attached to the front surface 110. This may be accomplished in several different ways. The friction pad 108 could be attached to the front surface 110 using an adhesive. Alternatively, the friction pad 108 could be formed on the front surface or fused to the front surface. Then in step 1304 multiple retaining pins 118, 118', 118"', 402, 404, 406 are attached to the back surface to form a retraction spring holder 116.

In one example, the backing plate is stamped to form pin mounting holes 1100 in the back plate. The retaining pins 118, 118', 118‴, 402, 404, 406 could for example be held in the pin mounting holes using an interference fit 1102.

A brake pad assembly 500, 700, 900 may be manufactured by inserting a retraction spring into the retraction spring holder 116 formed by the retaining pins 118, 118', 118‴, 402, 404, 406.

### List of reference numerals

- 100: brake system
- 102: brake disc
- 104: brake pad
- 106: backing plate
- 108: friction pad
- 110: front surface
- 112: back surface
- 114: retraction spring
- 116: retraction spring holder
- 118: retaining pin
- 118': retaining pin
- 118": retaining pin
- 119: spaced distance L apart
- 122: structural element
- 123: sliding contact
- 124: direction of restoring force
- 126: portion of brake caliper
- 128: track for brake pad
- 130: direction of travel
- 200: elongated loop
- 202: V-shaped tensioning structure
- 204: end section
- 206: circular profile
- 208: rod shaped section
- 210: outer edge
- 212: inner edge
- 300: wedge shaped surface
- 302: downward force holding brake pad in place
- 304: direction of force from brake caliper
- 400: brake pad
- 402: pin configured as outer pin
- 404: pin configured as outer pin and end stop
- 406: pin configured as inner pin
- 500: brake pad assembly
- 600: brake pad
- 700: brake pad assembly
- 800: brake pad
- 900: brake pad assembly
- 1000: side surface
- 1000': side surface with notched profile
- 1100: pin mounting hole
- 1102: interference fit
- 1104: axis of symmetry
- 1106: matching profile
- 1108: predefined distance
- 1300: providing a backing plate with a front surface and a back surface
- 1302: attaching a friction pad to the front surface
- 1304: attaching multiple pins to the back surface to form a retraction spring holder

## Claims

1. A brake pad (104, 400, 600, 800) comprising a backing plate (106) and a friction pad (108), wherein the backing plate has a front surface (110) and a back surface (112), wherein the friction pad is attached to the front surface of the backing plate, wherein the brake pad comprises a retraction spring holder (116) mounted to the back surface, **characterised in that** the retraction spring holder is formed from multiple retaining pins (118, 118', 118"', 402, 404, 406), wherein each of the multiple retaining pins is attached to the back surface of the backing plate, wherein each of the multiple pins comprises a side surface (1000), wherein the side surface has a profile (1106) configured to hold a retraction spring (114) at the back surface.

2. The brake pad of claim 1, wherein each of the multiple pins is attached to the backing plate using an interference fit (1102).

3. The brake pad of claim 1 or 2, wherein the profile of the side surface is cylindrically symmetric (1104), wherein the profile of the side surface is concave (1000, 1000').

4. The brake pad of claim 1, 2, or 3, wherein the retraction spring holder is configured to receive and hold an elongated loop (200) of the retraction spring with the side surface of each of the multiple pins.

5. The brake pad of claim 4, wherein the multiple pins are configured to receive the elongated loop via a sliding fit.

6. The brake pad of claim 4 or 5, wherein the multiple pins have any one of the following configurations:
- wherein (800) the multiple pins comprise five outer pins (402, 404) configured to hold the elongated loop from an outer edge (210) of the elongated loop, and wherein one (404) of the five outer pins functions as an end stop configured to restrict the sliding fit of the retraction spring;
- wherein (600) the multiple pins comprise two outer pins (404) configured to hold the elongated loop from an outer edge (210) of the elongated loop and to function as end stops restricting the sliding fit of the retraction spring, wherein the multiple pins further comprise two inner pins (406) each configured to hold the elongated loop from an inner edge (212) of the elongated loop; and
- wherein (400) the multiple pins comprise four outer pins (402, 406) configured to hold the elongated loop from an outer edge (210) of the elongated loop, and wherein two (404) of the four outer pins functions as end stops configured to restrict the sliding fit of the retraction spring, wherein one of the multiple pins comprise one inner pin (406) configured to hold the elongated loop from an inner edge (212) of the elongated loop.

7. A brake pad assembly (500, 700, 900) comprising a brake pad (104, 400, 600, 800) according to any one of claims 1 through 6, wherein the break pad assembly further comprises the retraction spring (114).

8. The brake pad assembly of claim 7, wherein the elongated loop comprises two rod shaped sections (208), wherein the two rod shaped sections are parallel, wherein the retraction spring holder is configured to receive at least the two rod shaped sections.

9. The brake pad assembly of claim 7 or 8, wherein the break pad is according to any one of claims 4 through 6, wherein the wherein the retraction spring is formed as the elongated loop (200), wherein the retraction spring comprises two end sections (204) that overlap at one end of the elongated loop and extend beyond the elongated loop, wherein the two end sections form a V-shaped tensioning structure (202), wherein the retraction spring holder is configured to receive and hold the elongated loop of the retraction spring with the side surface of each of the multiple pins.

10. The brake pad assembly of claim 7, 8, or 9, wherein the retraction spring has a circular profile (206), wherein the profiled of the side surface of each of the multiple retaining pins is cylindrically symmetric (1104), and wherein the side surface has a concave profile (1000) configured for receiving the circular profile.

11. A brake system (100) for a truck, wherein the brake system comprises:
- a brake disc (102);
- a brake pad assembly according to any one of claims 7 through 10;
- a brake caliper (126) configured for pressing the brake pad assembly such that the friction pad contacts the brake disc; and
- a structural element (122), wherein the structural element extends across the brake pad assembly;
wherein the retraction spring is installed in the retraction spring holder, wherein the retraction spring is configured to form a sliding contact (123) with the structural element such that the tension in the retraction spring increases as the brake caliper presses the friction pad against the brake disc, wherein the sliding contact between the retraction spring and the structural element is configured to provide a restoring force (124) on the brake pad that moves the brake pad away from the brake disc to a non-activated position.

12. The brake system of claim 11, wherein the brake pad assembly is according to claim 9 or 10, wherein the structural element comprises a wedge shaped surface (300), wherein the wedge shaped surface and the V-shaped tensioning structure form the sliding contact, wherein the wedge shaped surface is configured for tensioning the retraction spring by forcing the two ends sections of the V-shaped tensioning structure apart.

13. The brake system of claim 11 or 12, wherein the brake caliper is a pneumatic brake caliper.

14. A method of manufacturing a brake pad (104, 400, 600, 800), wherein the method comprises:
- providing (1300) a backing plate (106) with a front surface (110) and a back surface (112);
- attaching a (1302) friction pad (108) to the front surface; and
- attaching (1304) multiple retaining pins (118, 118', 118‴, 402, 404, 406), to the back surface to form a retraction spring holder (116), wherein each of the multiple retaining pins comprises a side surface (1000, 1000'), wherein the side surface has a profile (1106) configured to hold a retraction spring at the back surface.

15. The method of claim 14, wherein the method further comprises stamping pin mounting holes (1100) in the backing plate before attaching the friction pad to the front surface, wherein each of the multiple retaining pins is mounted in one of the mounting holes using an interference fit (1102).

## Patentansprüche

1. Bremsbelag (104, 400, 600, 800) mit einer Trägerplatte (106) und einem Reibbelag (108), wobei die Trägerplatte eine Vorderseite (110) und eine Rückseite (112) aufweist, wobei das Reibbelag an der Vorderseite der Trägerplatte befestigt ist, wobei der Bremsbelag einen Rückstellfederhalter (116) umfasst, der an der Rückseite angebracht ist, **dadurch gekennzeichnet, dass** der Rückstellfederhalter aus mehreren Haltebolzen (118, 118', 118"', 402, 404, 406) gebildet ist, wobei jeder der mehreren Haltebolzen an der Rückseite der Trägerplatte befestigt ist, wobei jeder der mehreren Bolzen eine Seitenfläche (1000) aufweist, wobei die Seitenfläche ein Profil (1106) aufweist, das so konfiguriert ist, dass es eine Rückzugsfeder (114) an der Rückseite hält.

2. Der Bremsbelag nach Anspruch 1, wobei jeder der mehreren Stifte unter Verwendung einer Presspassung (1102) an der Trägerplatte befestigt ist.

3. Bremsbelag nach Anspruch 1 oder 2, wobei das Profil der Seitenfläche zylindersymmetrisch (1104) ist, wobei das Profil der Seitenfläche konkav (1000, 1000') ist.

4. Bremsbelag nach Anspruch 1, 2 oder 3, wobei der Rückzugsfederhalter so konfiguriert ist, dass er eine längliche Schlaufe (200) der Rückzugsfeder mit der Seitenfläche jedes der mehreren Stifte aufnimmt und hält.

5. Der Bremsbelag nach Anspruch 4, wobei die mehreren Stifte so konfiguriert sind, dass sie die längliche Schlaufe über eine Gleitpassung aufnehmen.

6. Bremsbelag nach Anspruch 4 oder 5, wobei die mehreren Stifte eine der folgenden Konfigurationen aufweisen:
- wobei (800) die mehreren Stifte fünf äußere Stifte (402, 404) umfassen, die so konfiguriert sind, dass sie die längliche Schlaufe an einer Außenkante (210) der länglichen Schlaufe ( ) halten, und wobei einer (404) der fünf äußeren Stifte als Endanschlag fungiert, der so konfiguriert ist, dass er die Gleitpassung der Rückzugsfeder begrenzt;
- wobei (600) die mehreren Stifte zwei äußere Stifte (404) umfassen, die so konfiguriert sind, dass sie die längliche Schlaufe an einer Außenkante (210) der länglichen Schlaufe halten und als Endanschläge fungieren, die die Gleitpassung der Rückzugsfeder begrenzen, wobei die mehreren Stifte ferner zwei innere Stifte (406) umfassen, die jeweils so konfiguriert sind, dass sie die längliche Schlaufe an einer Innenkante (212) der länglichen Schlaufe halten; und
- wobei (400) die mehreren Stifte vier äußere Stifte (402, 406) umfassen, die so konfiguriert sind, dass sie die längliche Schlaufe an einer Außenkante (210) der länglichen Schlaufe halten, und wobei zwei (404) der vier äußeren Stifte als Endanschläge fungieren, die so konfiguriert sind, dass sie die Gleitpassung der Rückzugsfeder begrenzen, wobei einer der mehreren Stifte einen inneren Stift (406) umfasst, der so konfiguriert ist, dass er die längliche Schlaufe an einer Innenkante (212) der länglichen Schlaufe hält.

7. Bremsbelagbaugruppe (500, 700, 900), die einen Bremsbelag (104, 400, 600, 800) gemäß einem der Ansprüche 1 bis 6 umfasst, wobei die Bremsbelagbaugruppe ferner die Rückzugsfeder (114) umfasst.

8. Die Bremsbelagbaugruppe nach Anspruch 7, wobei die längliche Schlaufe zwei stabförmige Abschnitte (208) umfasst, wobei die beiden stabförmigen Abschnitte parallel sind, wobei der Rückzugsfederhalter so konfiguriert ist, dass er mindestens die beiden stabförmigen Abschnitte aufnimmt.

9. Die Bremsbelagbaugruppe nach Anspruch 7 oder 8, wobei der Bremsbelag einem der Ansprüche 4 bis 6 entspricht, wobei die Rückzugsfeder als längliche Schlaufe (200) ausgebildet ist, wobei die Rückzugsfeder zwei Endabschnitte (204) umfasst, die sich an einem Ende der länglichen Schlaufe überlappen und über die längliche Schlaufe hinausragen, wobei die beiden Endabschnitte eine V-förmige Spannstruktur (202) bilden, wobei der Rückzugsfederhalter so konfiguriert ist, dass er die längliche Schleife der Rückzugsfeder mit der Seitenfläche jedes der mehreren Stifte aufnimmt und hält.

10. Die Bremsbelagbaugruppe nach Anspruch 7, 8 oder 9, wobei die Rückzugsfeder ein kreisförmiges Profil (206) aufweist, wobei das Profil der Seitenfläche jedes der mehreren Halte (1104) zylindersymmetrisch ist und wobei die Seitenfläche ein konkaves Profil (1000) aufweist, das zur Aufnahme des kreisförmigen Profils konfiguriert ist.

11. Bremssystem (100) für einen Lkw, wobei das Bremssystem umfasst:
- eine Bremsscheibe (102);
- eine Bremsbelagbaugruppe gemäß einem der Ansprüche 7 bis 10;
- einen Bremssattel (126), der so konfiguriert ist, dass er die Bremsbelagbaugruppe so drückt, dass der Reibbelag die Bremsscheibe berührt; und
- ein Strukturelement (122), wobei sich das Strukturelement über die Bremsbelagbaugruppe erstreckt;
wobei die Rückstellfeder in dem Rückstellfederhalter installiert ist, wobei die Rückstellfeder so konfiguriert ist, dass sie einen Gleitkontakt (123) mit dem Strukturelement bildet, so dass die Spannung in der Rückstellfeder zunimmt, wenn der Bremssattel das Reibbelag gegen die Bremsscheibe drückt, wobei der Gleitkontakt zwischen der Rückstellfeder und dem Strukturelement so konfiguriert ist, dass er eine Rückstellkraft (124) auf den Bremsbelag auszuüben, die den Bremsbelag von der Bremsscheibe weg in eine nicht aktivierte Position bewegt.

12. Das Bremssystem nach Anspruch 11, wobei die Bremsbelagbaugruppe gemäß Anspruch 9 oder 10 ist, wobei das Strukturelement eine keilförmige Oberfläche (300) umfasst, wobei die keilförmige Oberfläche und die V-förmige Spannstruktur den Gleitkontakt bilden, wobei die keilförmige Oberfläche so konfiguriert ist, dass sie die Rückzugsfeder spannt, indem sie die beiden Endabschnitte der V-förmigen Spannstruktur auseinander drückt.

13. Das Bremssystem nach Anspruch 11 oder 12, wobei der Bremssattel ein pneumatischer Bremssattel ist.

14. Verfahren zur Herstellung eines Bremsbelags (104, 400, 600, 800), wobei das Verfahren umfasst:
- Bereitstellen (1300) einer Trägerplatte (106) mit einer Vorderseite (110) und einer Rückseite (112);
- Anbringen (1302) eines Reibbelags (108) an der Vorderseite; und
- Befestigen (1304) mehrerer Haltebolzen (118, 118', 118‴, 402, 404, 406) an der Rückseite, um einen Rückzugsfederhalter (116) zu bilden, wobei jeder der mehreren Haltebolzen eine Seitenfläche (1000, 1000') aufweist, wobei die Seitenfläche ein Profil (1106) aufweist, das so konfiguriert ist, dass es eine Rückzugsfeder an der Rückseite hält.

15. Verfahren nach Anspruch 14, wobei das Verfahren ferner das Stanzen von Befestigungslöchern (1100) für die Stifte in die Trägerplatte vor dem Anbringen des Reibungskissens an der Vorderseite umfasst, wobei jeder der mehreren Haltebolzen unter Verwendung einer Presspassung (1102) in einem der Befestigungslöcher befestigt wird.

## Revendications

1. Une plaquette de frein (104, 400, 600, 800) comprenant une plaque d'appui (106) et une garniture de friction (108), dans laquelle la plaque d'appui présente une surface avant (110) et une surface arrière (112), dans laquelle la plaquette de friction est fixée à la surface avant de la plaque de support, dans laquelle la plaquette de frein comprend un support de ressort de rétraction (116) monté sur la surface arrière, **caractérisée en ce que** le support de ressort de rétraction est formé à partir de plusieurs broches de retenue (118, 118', 118‴, 402, 404, 406), dans lequel chacune des multiples broches de retenue est fixée à la surface arrière de la plaque de support, dans lequel chacune des multiples broches comprend une surface latérale (1000), dans lequel la surface latérale présente un profil (1106) configuré pour maintenir un ressort de rétraction (114) au niveau de la surface arrière.

2. La plaquette de frein selon la revendication 1, dans laquelle chacune des multiples broches est fixée à la plaque de support à l'aide d'un ajustement serré (1102).

3. La plaquette de frein selon la revendication 1 ou 2, dans laquelle le profil de la surface latérale est cylindriquement symétrique (1104), dans laquelle le profil de la surface latérale est concave (1000, 1000').

4. La plaquette de frein selon la revendication 1, 2 ou 3, dans laquelle le support de ressort de rappel est configuré pour recevoir et maintenir une boucle allongée (200) du ressort de rappel avec la surface latérale de chacune des multiples broches.

5. La plaquette de frein selon la revendication 4, dans laquelle les multiples broches sont configurées pour recevoir la boucle allongée via un ajustement coulissant.

6. La plaquette de frein selon la revendication 4 ou 5, dans laquelle les multiples broches ont l'une quelconque des configurations suivantes :
- dans laquelle (800) les multiples broches comprennent cinq broches extérieures (402, 404) configurées pour maintenir la boucle allongée à partir d'un bord extérieur (210) de la boucle d' allongée, et dans laquelle l'une (404) des cinq broches extérieures fonctionne comme une butée d'extrémité configurée pour limiter l'ajustement coulissant du ressort de rétraction ;
- dans lequel (600) les broches multiples comprennent deux broches extérieures (404) configurées pour maintenir la boucle allongée à partir d'un bord extérieur (210) de la boucle allongée et pour fonctionner comme des butées d'extrémité limitant l'ajustement coulissant du ressort de rétraction, dans lequel les broches multiples comprennent en outre deux broches intérieures (406) chacune configurée pour maintenir la boucle allongée à partir d'un bord intérieur (212) de la boucle allongée ; et
- dans lequel (400) les broches multiples comprennent quatre broches extérieures (402, 406) configurées pour maintenir la boucle allongée à partir d'un bord extérieur (210) de la boucle allongée, et dans lequel deux (404) des quatre broches extérieures fonctionnent comme des butées d'extrémité configurées pour limiter le glissement du ressort de rétraction, dans lequel l'une des broches multiples comprend une broche intérieure (406) configurée pour maintenir la boucle allongée à partir d'un bord intérieur (212) de la boucle allongée.

7. Ensemble de plaquette de frein (500, 700, 900) comprenant une plaquette de frein (104, 400, 600, 800) selon l'une quelconque des revendications 1 à 6, dans lequel l'ensemble de plaquette de frein comprend en outre le ressort de rétraction (114).

8. L'ensemble de plaquette de frein selon la revendication 7, dans lequel la boucle allongée comprend deux sections en forme de tige (208), dans lequel les deux sections en forme de tige sont parallèles, dans lequel le support de ressort de rétraction est configuré pour recevoir au moins les deux sections en forme de tige.

9. Ensemble de plaquette de frein selon la revendication 7 ou 8, dans lequel la plaquette de frein est conforme à l'une quelconque des revendications 4 à 6, dans lequel le ressort de rétraction est formé comme la boucle allongée (200), dans lequel le ressort de rétraction comprend deux sections d'extrémité (204) qui se chevauchent à une extrémité de la boucle allongée et s'étendent au-delà de la boucle allongée, dans lequel les deux sections d'extrémité forment une structure de tension en forme de V (202), dans lequel le support de ressort de rétraction est configuré pour recevoir et maintenir la boucle allongée du ressort de rétraction avec la surface latérale de chacune des multiples broches.

10. Ensemble de plaquette de frein selon la revendication 7, 8 ou 9, dans lequel le ressort de rappel a un profil circulaire (206), dans lequel le profil de la surface latérale de chacune des multiples broches de retenue ( ) est cylindriquement symétrique (1104), et dans lequel la surface latérale a un profil concave (1000) configuré pour recevoir le profil circulaire.

11. Système de freinage (100) pour un camion, dans lequel le système de freinage comprend :
- un disque de frein (102) ;
- un ensemble de plaquettes de frein selon l'une quelconque des revendications 7 à 10 ;
- un étrier de frein (126) configuré pour presser l'ensemble de plaquettes de frein de telle sorte que la plaquette de friction entre en contact avec le disque de frein ; et
- un élément structurel (122), dans lequel l'élément structurel s'étend à travers l'ensemble de plaquettes de frein ;
dans lequel le ressort de rappel est installé dans le support de ressort de rappel, dans lequel le ressort de rappel est configuré pour former un contact coulissant (123) avec l'élément structurel de telle sorte que la tension dans le ressort de rappel augmente lorsque l'étrier de frein presse la plaquette de friction contre le disque de frein, dans lequel le contact coulissant entre le ressort de rappel et l'élément structurel est configuré pour fournir une force de rappel (124) sur la plaquette de frein qui éloigne la plaquette de frein du disque de frein vers une position non activée.

12. Le système de freinage selon la revendication 11, dans lequel l'ensemble de plaquette de frein est selon la revendication 9 ou 10, dans lequel l'élément structurel comprend une surface en forme de coin (300), dans lequel la surface en forme de coin et la structure de tension en forme de V forment le contact coulissant, dans lequel la surface en forme de coin est configurée pour tendre le ressort de rappel en écartant les deux sections d'extrémité de la structure de tension en forme de V.

13. Système de freinage selon la revendication 11 ou 12, dans lequel l'étrier de frein est un étrier de frein pneumatique.

14. Procédé de fabrication d'une plaquette de frein (104, 400, 600, 800), dans lequel le procédé comprend :
- la fourniture (1300) d'une plaque d'appui (106) avec une surface avant (110) et une surface arrière (112) ;
- fixer (1302) une plaquette de friction (108) à la surface avant ; et
- fixant (1304) plusieurs broches de retenue (118, 118', 118‴, 402, 404, 406) à la surface arrière pour former un support de ressort de rétraction (116), dans lequel chacune des multiples broches de retenue comprend une surface latérale (1000, 1000'), dans lequel la surface latérale a un profil (1106) configuré pour maintenir un ressort de rétraction au niveau de la surface arrière.

15. Procédé selon la revendication 14, dans lequel le procédé comprend en outre l'estampage de trous de montage de broches (1100) dans la plaque de support avant de fixer la patin de friction à la surface avant, dans lequel chacune des multiples broches de retenue est montée dans l'un des trous de montage à l'aide d'un ajustement serré (1102).
